# EUROPEAN PATENT APPLICATION

(11) **EP 4 831 409 A1**
(43) Date of publication of application: **28.10.2026**
(21) Application number: 25736253.3
(22) Date of filing: 02.01.2025
(51) Int. Cl.: E02F 9/24, E02F 9/26, E02F 9/20, G01G 19/02, G01G 19/08

(54) **SYSTEM FOR PREVENTING TIPPING OF CONSTRUCTION EQUIPMENT**

(30) Priority: 05.01.2024 KR 20240002410
(71) Applicant: HD Construction Equipment Co., Ltd., Seongnam-si, Gyeonggi-do 13553 (KR)
(72) Inventor: MOON, Jihyun, Suwon-si Gyeonggi-do 16635 (KR); JUNG, Chansu, Seongnam-si Gyeonggi-do 13595 (KR); KWON, Jeonghoon, Yongin-si Gyeonggi-do 16810 (KR); KIM, Youngbum, Hwaseong-si Gyeonggi-do 18475 (KR)
(74) Representative: Isarpatent
(86) International application number: PCT/KR2025/000042
(87) International publication number: WO 2025/147099

(57) **Abstract**

The present disclosure provides a rollover prevention system for construction equipment that calculates a tipping load of construction equipment and provides the calculated tipping load to an operator, and that effectively warns the operator of a rollover risk by indicating rollover risks according to a swing angle section and a reach section.

## Description

### FIELD

The present disclosure relates to a rollover prevention system for construction equipment, and more particularly, to a rollover prevention system for construction equipment that calculates a tipping load of construction equipment and provides the calculated tipping load to an operator, and that effectively warns the operator of a rollover risk by indicating the rollover risk according to a swing angle section and a reach section.

### BACKGROUND

Construction equipment generally refers to all types of machinery used in civil engineering work or building construction work. In general, construction equipment includes an engine and a hydraulic pump operated by power generated from the engine, and travels or drives a work implement using power generated through the engine and the hydraulic pump.

Since such construction equipment is frequently operated on rough terrain and often carries loads, the possibility of accidents caused by rollover is relatively higher than that of ordinary road vehicles. Accordingly, operators are required to pay considerable attention to rollover risks during traveling or operation. Such continuous attention may increase operator fatigue, and rollover accidents may occur due to carelessness.

To prevent such accidents, a conventional method compares an actually measured weight of a lifted load with values listed in a tipping load chart, and warns a user of a rollover risk when the measured weight exceeds a rated tipping load value indicated in the tipping load chart. However, since the rated tipping load in the tipping load chart is calculated solely based on a longitudinal axis and a lateral axis under the assumption that the equipment is stationary and positioned on level ground, the rollover risk determined by the system may differ from an actual situation when the equipment is moving or positioned on a slope. In other words, the tipping load chart can consider only the static stability of the equipment on level ground.

In addition, the tipping load chart is configured in the form of a table in which rated tipping load values are arranged according to predetermined intervals of reach and height. Accordingly, even a slight positional change of a lift point may cause a discontinuous change in the rated tipping load value. Such discontinuities may cause significant inconvenience to an operator. For example, the system may warn the operator that the equipment is in an unsafe state even though the equipment is actually in a safe state with no rollover risk. Conversely, the system may indicate that the equipment is in a safe state even though the equipment is actually in an unsafe state.

To address the above-described problems, a method has been proposed in which a ZMP (Zero Moment Point), capable of determining dynamic stability of the equipment, is calculated or measured and a rollover risk of the equipment is continuously monitored and warned. However, in the conventional method, rollover risk is warned merely by displaying the ZMP within a support region defined by connecting ground contact points of the equipment. That is, since the rollover risk is determined only based on the current ZMP of the equipment, there is a limitation in that it is difficult to inform the operator in advance of how the rollover risk may change when the equipment assumes a different posture.

### SUMMARY

An object of the present disclosure is to provide a rollover prevention system for construction equipment that calculates a tipping load of the construction equipment and provides the calculated tipping load to an operator, and that effectively warns the operator of a rollover risk by indicating rollover risks according to a swing angle section and a reach section.

The technical problem to be achieved by the present disclosure is not limited to the technical problem described above, and other technical problems not specifically mentioned herein will be clearly understood by those skilled in the art from the following description.

According to an embodiment of the present disclosure for solving the above-described technical problem, there is provided a rollover prevention system for construction equipment including a lower body, an upper body rotatably installed on the lower body, a boom rotatably connected to the upper body and rotated by a boom cylinder, an arm rotatably connected to the boom and rotated by an arm cylinder, and a bucket rotatably connected to the arm and rotated by a bucket cylinder, wherein the system calculates a tipping load using position information, acceleration information, and external force information of the lower body, the upper body, the boom, the arm, and the bucket, and coordinates at boundaries of a support region defined by connecting ground contact points of the equipment, and provides the calculated tipping load to an operator.

According to an embodiment, the system may obtain coordinates (***x**_{zmp}*,***y**_{zmp}*) of a ZMP using the position information, acceleration information, and external force information of the lower body, the upper body, the boom, the arm, and the bucket, derive a one-dimensional function connecting an origin of the support region and the coordinates (***x**_{zmp}, **y**_{zmp}*) of the ZMP, determine coordinates (***x**_{RTL}**,y**_{RTL}*) at a boundary of the support region through the one-dimensional function, and calculate the tipping load by back-calculation using the coordinates (***x**_{RTL}*,***y**_{RTL}*) at the boundary of the support region.

According to an embodiment, when the construction equipment is positioned on an inclined surface, the system may obtain a slope rotation matrix *Rₒ* from an inclination sensor provided on the upper body, derive a slope rotation matrix *R*₁ by considering a swing angle of the upper body with respect to the lower body in the slope rotation matrix *Rₒ*, and apply *R*₁*^{T}* to gravitational acceleration among the acceleration information when calculating the coordinates (*x_{zmp},y_{zmp}*) of the ZMP.

According to an embodiment, the slope rotation matrix *Rₒ* may be *Rₓ*(θ*ᵣₒₗₗ*)*R_{y}*(θ*_{pitch}*) or *R_{y}*(*θ_{pitch}*)*Rₓ*(θ*ᵣₒₗₗ*), wherein *Rₓ*(θ) is a matrix transformation representing rotation about an x-axis, *R_{y}*(θ) is a matrix transformation representing rotation about a y-axis, θ*ᵣₒₗₗ* is a roll angle of the upper body, and θ*_{pitch}* is a pitch angle of the upper body.

According to an embodiment, the slope rotation matrix *R*₁ may be derived by multiplying the slope rotation matrix *Rₒ* by *R_{z}^{T}*(*θ_{swing}*), wherein *R_{z}*(θ) is a matrix transformation representing rotation about a z-axis, and θ*_{swing}* is the swing angle of the upper body with respect to the lower body.

According to an embodiment, the support region may correspond to a region defined by connecting ground contact points of the construction equipment when the construction equipment is positioned on level ground or on an inclined surface.

According to an embodiment, when the construction equipment is positioned on an inclined surface, an origin of the support region may be determined by additionally extracting coordinates of two ZMPs by changing the swing angle of the upper body to arbitrary values, connecting a total of three ZMP coordinates to define a circle, and setting a center of the circle as the origin.

According to an embodiment, the system may additionally calculate a tipping load by changing a swing angle or a reach of the construction equipment to an arbitrary value different from a current swing angle and a current reach, determine a rollover risk by comparing the additionally calculated tipping load with a current lifted load, and provide information regarding whether a rollover risk exists at the arbitrary value to an operator.

According to an embodiment, the system may divide the swing angle of the construction equipment into a plurality of sections and divide the reach of the construction equipment into a plurality of sections, and may provide an operator with information indicating whether a rollover risk exists for each section.

According to an embodiment, the system may divide the swing angle of the construction equipment into six or more sections and divide the reach of the construction equipment into two or more sections.

According to an embodiment, the system may calculate a rated hydraulic critical load of the boom cylinder using a moment equilibrium equation of the boom cylinder, calculate a rated hydraulic critical load of the arm cylinder using a moment equilibrium equation of the arm cylinder, and set a smaller one of the rated hydraulic critical load of the boom cylinder and the rated hydraulic critical load of the arm cylinder as a final hydraulic critical load.

According to an embodiment, when the construction equipment is positioned on an inclined surface, the system may obtain a slope rotation matrix *Rₒ* from an inclination sensor provided on the upper body, and may apply *Rₒ^{T}* to a gravitational-force component in a moment equilibrium equation of the boom cylinder and to a gravitational-force component in a moment equilibrium equation of the arm cylinder.

According to an embodiment, the system may determine a smaller value between the tipping load and the final hydraulic critical load and provide the determined value to an operator.

According to an embodiment, when the construction equipment is positioned on an inclined surface, the coordinates (*x_{zmp}*,y*_{zmp}*) of the ZMP may be calculated according to Equation 2. [Equation 2] $\begin{matrix}{x}_{zmp} = \frac{{\sum }_{i} {m}_{i} \left(z{"}_{i}+{\left({{R}_{1}}^{T}g\right)}_{z}\right) {x}_{i} - {\sum }_{i} {m}_{i} \left(x{"}_{i}+{\left({{R}_{1}}^{T}g\right)}_{x}\right) {z}_{i} - {\sum }_{i} {\left({T}_{i}\right)}_{y} + {\sum }_{j} {\left({M}_{j}\right)}_{y} + {\sum }_{k} \left({\left({s}_{k}\right)}_{z}{\left({f}_{k}\right)}_{x}-{\left({s}_{k}\right)}_{x}{\left({f}_{k}\right)}_{z}\right)}{{\sum }_{i} {m}_{i} \left(z{"}_{i}+{\left({{R}_{1}}^{T}g\right)}_{z}\right) - {\sum }_{k} {\left({f}_{k}\right)}_{z}} \\ {y}_{zmp} = \frac{{\sum }_{i} {m}_{i} \left(z{"}_{i}+{\left({{R}_{1}}^{T}g\right)}_{z}\right) {y}_{i} - {\sum }_{i} {m}_{i} \left(y{"}_{i}+{\left({{R}_{1}}^{T}g\right)}_{y}\right) {z}_{i} + {\sum }_{i} {\left({T}_{i}\right)}_{y} + {\sum }_{j} {\left({M}_{j}\right)}_{y} + {\sum }_{k} \left({\left({s}_{k}\right)}_{z}{\left({f}_{k}\right)}_{x}-{\left({s}_{k}\right)}_{x}{\left({f}_{k}\right)}_{z}\right)}{{\sum }_{i} {m}_{i} \left(z{"}_{i}+{\left({{R}_{1}}^{T}g\right)}_{z}\right) - {\sum }_{k} {\left({f}_{k}\right)}_{z}}\end{matrix}$

According to an embodiment, when the construction equipment is positioned on an inclined surface, the moment equilibrium equation of the boom cylinder may correspond to Equation 6, and the moment equilibrium equation of the arm cylinder may correspond to Equation 7. [Equation 6] $\left({r}_{Bm}\times {{R}_{o}}^{T}{F}_{Bm}\right) + \left({r}_{Arm}\times {{R}_{o}}^{T}{F}_{Arm}\right) + \left({r}_{Wght}\times {{R}_{o}}^{T}{F}_{Wght}\right) + \left({r}_{Bmcyl}\times {F}_{Bmcyl}\right) = 0$ [Equation 7] $\left({r}_{Arm}\times {{R}_{o}}^{T}{F}_{Arm}\right) + \left({r}_{Wght}\times {{R}_{o}}^{T}{F}_{Wght}\right) + \left({r}_{Armcyl}\times {F}_{Armcyl}\right) = 0$

According to an embodiment, the tipping load calculated based on current information of the construction equipment may be displayed as a numerical value on a display device of the construction equipment, and a tipping load calculated using an arbitrary value different from the current information of the construction equipment may be compared with a current lifted load to determine a rollover risk, after which the determined rollover risk may be displayed in color on the display device of the construction equipment.

According to the present disclosure, after calculating ZMP coordinates, a tipping load may be calculated by back-calculation using the ZMP coordinates and provided to an operator, thereby enabling the operator to intuitively identify and compare a current lifted load and the tipping load.

In addition, even when the construction equipment is positioned on an inclined surface rather than on level ground, a slope rotation matrix may be considered in gravitational acceleration, thereby significantly reducing a computational load required for calculating the ZMP coordinates.

In addition, tipping loads corresponding to a plurality of swing angle sections and a plurality of reach sections may be calculated to determine rollover risks, and the determined rollover risks may be displayed on a display device using colors or the like, thereby enabling the operator to recognize not only the rollover risk in a current state but also rollover risks associated with various operational conditions.

Further, since the tipping load is continuously displayed using the ZMP coordinates as an index, rollover risks may be indicated more continuously than in conventional techniques using a tipping load chart. In addition, even when a rated hydraulic critical load is reached, a hydraulic critical-risk indication may be provided separately from a rollover-risk indication, thereby allowing the operator to distinguish whether a warning condition is caused by a rollover risk or by a hydraulic critical-load risk.

Accordingly, injuries or fatalities of operators caused by rollover of construction equipment may ultimately be prevented.

The effects of the present disclosure are not limited to those described above, and should be understood to include all effects that can be inferred from the configuration of the invention described in the detailed description or the claims.

### BRIEF DESCRIPTION OF THE DRAWINGS

FIG. 1 is a side view illustrating construction equipment according to an embodiment of the present disclosure.
FIG. 2 is a block diagram schematically illustrating a rollover prevention system for construction equipment according to an embodiment of the present disclosure.
FIG. 3 is a schematic diagram illustrating a method of calculating a tipping load using ZMP coordinates.
FIGS. 4A and 4B are schematic diagrams illustrating a method of setting a support region and an origin when the construction equipment is positioned on an inclined surface.
FIGS. 5A and 5B are schematic diagrams illustrating an example in which an input value adjustment unit changes a reach of the construction equipment to an arbitrary value for a plurality of reach sections.
FIG. 6 is a schematic diagram illustrating a method of calculating a hydraulic critical load when the construction equipment is positioned on an inclined surface.
FIG. 7 is a front view illustrating a display device of FIG. 1 in detail.
FIG. 8A is a front view illustrating a first display unit of FIG. 7 when a danger condition occurs due to a tipping load.
FIG. 8B is a front view illustrating the first display unit of FIG. 7 when a danger condition occurs due to a critical load.
FIG. 9 is a front view illustrating another state of the display device of FIG. 1.

### DETAILED DESCRIPTION

Hereinafter, a preferrable embodiment with respect to a rollover prevention system for construction equipment according to the present disclosure will be described with reference to accompanying drawings.

Further, terms described below are defined in consideration of the functions of one or more exemplary embodiments, and may have different meanings according to the intention of a user or operator or the convention. Furthermore, the exemplary embodiments described below are not intended to limit the scope of the present disclosure but merely to exemplify configurational elements defined in the claims.

In order to clearly illustrate the present invention, parts not related to the description are omitted, and similar parts are denoted by like reference characters throughout the specification. Throughout the specification, when a certain portion "includes" or "comprises" a certain component, this indicates that other components are not excluded and may be further included unless otherwise noted.

In the present specification, regarding an element represented as a "unit" or a "module", two or more elements may be combined into one element or one element may be divided into two or more elements according to subdivided functions. In addition, each element described hereinafter may additionally perform some or all of functions performed by another element, in addition to main functions of itself, and some of the main functions of each element may be performed entirely by another component.

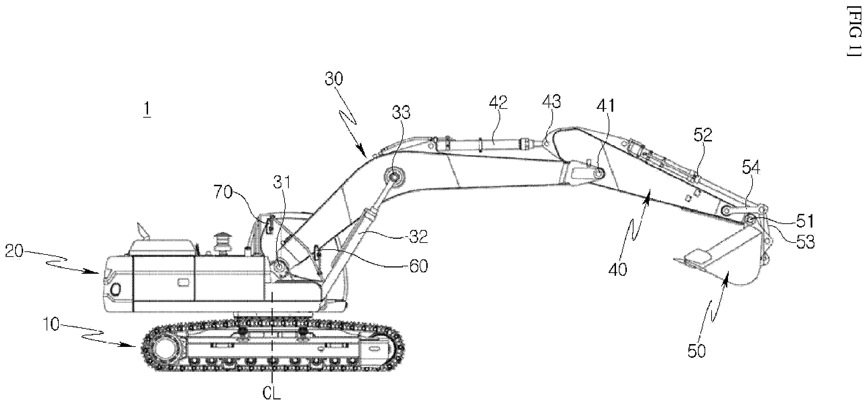

First, construction equipment (1) according to an embodiment of the present disclosure will be briefly described with reference to FIG. 1.

The construction equipment (1) includes a lower body (10) configured to move the equipment, an upper body (20) rotatably installed on the lower body (10), and a work apparatus installed on the upper body (20) to perform excavation operations, lifting operations, and the like. The work apparatus may include a boom (30) rotatably connected to the upper body (20) about a first support point (31) and rotationally driven by a boom cylinder (32), an arm (40) rotatably connected to the boom (30) about a second support point (41) and rotationally driven by an arm cylinder (42), and a bucket (50) rotatably connected to the arm (40) about a third support point (51) (lift point) and rotationally driven by a bucket cylinder (52). The bucket cylinder (52) is connected to the bucket (50) through a bucket link (53) and connected to the arm (40) through an arm link (54), such that a pivot angle of the bucket (50) may be controlled by the bucket link (53) and the arm link (54).

The lower body (10) is a traveling device for moving on rough terrain or level ground and may travel by receiving driving power from the upper body (20), without being limited to any particular configuration. For example, the lower body (10) may include a plurality of wheels, caterpillar tracks, or the like.

The upper body (20) is swing-driven on the lower body (10) by a swing motor about a central axis (CL). The upper body (20) may be provided with a cabin, an operation control device for controlling startup, shutdown, and overall operations of the equipment, an engine, and the like. For example, the operation control device may include an operating lever for inputting commands for movement of each cylinder, a display device (60) for displaying a rollover risk of the equipment and the like, and an alarm device (70) for generating a warning sound when a rollover risk or another hazardous condition of the equipment occurs.

The bucket (50) may lift or transport a heavy object generated during an excavation operation. The bucket (50) may be replaced with another work tool, such as a grapple, a cutter, or a breaker.

Sensors for measuring position information, acceleration information, and external force information are mounted on respective components of the construction equipment (1). The sensors described below are merely examples, and various methods may be employed to obtain the respective information.

More specifically, the upper body (20) may be provided with an inclination sensor configured to detect an inclination angle of the upper body (20). The inclination sensor measures an inclination angle with respect to a world coordinate system in which a gravity direction is used as a reference and a direction opposite to gravity is defined as a z-axis. A swing angle sensor may be provided on the central axis (CL) of the upper body (20) to detect a swing angle of the upper body (20) relative to the lower body (10).

In addition, acceleration sensors may be provided in the vicinity of centers of the lower body (10), the upper body (20), the boom (30), and the arm (40), respectively, to detect acceleration. Acceleration may first be measured through the acceleration sensors, and rotational angles of the respective components may then be derived therefrom. In some cases, angle sensors for measuring rotational angles may be provided at the respective support points (31, 41, 51) separately from the acceleration sensors.

As a method for measuring external force information, pin force sensors may be provided at a pin connecting the arm (40) and the bucket (50) (i.e., a pin installed at the third support point (51)) and at a pin connecting the bucket link (53) and the bucket (50), respectively. For example, each pin force sensor may include a strain gauge inserted into a cylindrical body and may detect a magnitude and a direction of a force (external force) applied to the corresponding pin by measuring deformation generated in the strain gauge.

The rollover prevention system of the present disclosure determines a dynamic stability of the construction equipment (1) using a ZMP. In particular, the system calculates a tipping load using the calculated ZMP and provides the tipping load to an operator. Furthermore, the system calculates tipping loads corresponding to a plurality of swing angle sections and a plurality of reach sections, determines rollover risks based thereon, and provides the determined rollover risks to the operator by displaying them on the display device using colors or the like.

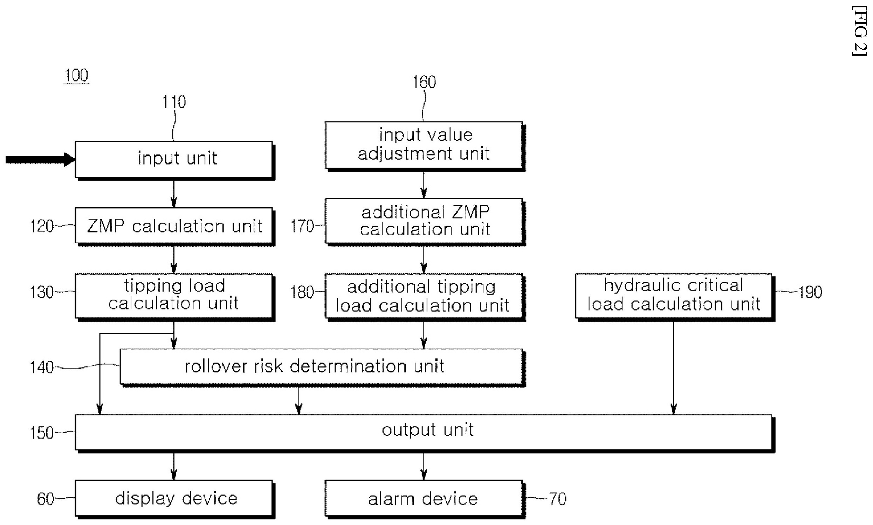

Referring to FIG. 2, a rollover prevention system (100) according to an embodiment of the present disclosure may include an input unit (110), a ZMP calculation unit (120), a tipping load calculation unit (130), a rollover risk determination unit (140), an output unit (150), the display device (60), and the alarm device (70). A detailed operation of the rollover prevention system (100) will now be described.

Values detected by the plurality of sensors described above are input to the input unit (110). Specifically, an inclination angle of the upper body (20), a swing angle of the upper body (20), a rotational angle of the boom (30), a rotational angle of the arm (40), a rotational angle of the bucket (50), an acceleration of the lower body (10), an acceleration of the upper body (20), an acceleration of the boom (30), an acceleration of the arm (40), an external force applied to the pin connecting the arm (40) and the bucket (50), and an external force applied to the pin connecting the bucket link (53) and the bucket (50) may be input thereto.

The ZMP calculation unit (120) calculates a ZMP from the values input to the input unit (110). The ZMP refers to a point on the ground at which rotational moments caused by inertial forces, gravitational forces, and external forces acting on the equipment are counterbalanced by a ground reaction force to establish dynamic equilibrium, and is conceptually equivalent to a Center of Pressure (CoP) from the perspective of the ground reaction force.

First, when the equipment (1) is positioned on level ground such that no inclination angle exists, coordinates (*x_{ZMP}*,*y*_{ZMP}) of the ZMP may be calculated according to Equation 1 below. [Equation 1] $\begin{matrix}{x}_{zmp} = \frac{{\sum }_{i} {m}_{i} \left(z{"}_{i}+{g}_{z}\right) {x}_{i} - {\sum }_{i} {m}_{i} \left(x{"}_{i}+{g}_{x}\right) {z}_{i} - {\sum }_{i} {\left({T}_{i}\right)}_{y} + {\sum }_{j} {\left({M}_{j}\right)}_{y} + {\sum }_{k} \left({\left({s}_{k}\right)}_{z}{\left({f}_{k}\right)}_{x}-{\left({s}_{k}\right)}_{x}{\left({f}_{k}\right)}_{z}\right)}{{\sum }_{i} {m}_{i} \left(z{"}_{i}+{g}_{z}\right) - {\sum }_{k} {\left({f}_{k}\right)}_{z}} \\ {y}_{zmp} = \frac{{\sum }_{i} {m}_{i} \left(z{"}_{i}+{g}_{z}\right) {y}_{i} - {\sum }_{i} {m}_{i} \left(y{"}_{i}+{g}_{y}\right) {z}_{i} + {\sum }_{i} {\left({T}_{i}\right)}_{y} + {\sum }_{j} {\left({M}_{j}\right)}_{y} + {\sum }_{k} \left({\left({s}_{k}\right)}_{z}{\left({f}_{k}\right)}_{x}-{\left({s}_{k}\right)}_{x}{\left({f}_{k}\right)}_{z}\right)}{{\sum }_{i} {m}_{i} \left(z{"}_{i}+{g}_{z}\right) - {\sum }_{k} {\left({f}_{k}\right)}_{z}}\end{matrix}$

Here, i and j denote positions of centers of gravity of respective components. For example, i, j = 1 denotes a center-of-gravity position of the lower body (10), i, j = 2 denotes a center-of-gravity position of the upper body (20), i, j = 3 denotes a center-of-gravity position of the boom (30), i, j = 4 denotes a center-of-gravity position of the arm (40), and i, j = 5 denotes a center-of-gravity position of the bucket (50). In addition, k denotes a position at which an external force is applied.

Here, *mᵢ* denotes a mass at the i-th position, *z*"*ᵢ* denotes acceleration in a z-direction at the i-th position, *g_{z}* denotes gravitational acceleration in the z-direction, *xᵢ* denotes an x-coordinate of the i-th position, *x"ᵢ* denotes acceleration in the x-direction at the i-th position, *gₓ* denotes gravitational acceleration in the x-direction, *zᵢ* denotes a z-coordinate of the i-th position, (*Tᵢ)_{y}* denotes a rotational moment in a y-direction at the i-th position, (*Mⱼ*)*_{y}* denotes a moment in the y-direction externally applied at the j-th position, (*sₖ*)*_{z}* denotes a z-coordinate of the k-th position at which the external force is applied, (*fₖ*)*ₓ* denotes an external force in the x-direction at the k-th position, (*sₖ)ₓ* denotes an x-coordinate of the k-th position, and (*fₖ*)*_{z}* denotes an external force in the z-direction at the k-th position.

When the construction equipment (1) is performing a lifting operation, that is, when no externally applied moment or force exists, *Mⱼ* and *fₖ* may be ignored. Accordingly, when *gₓ* and *g_{y}* are both assumed to be zero, the equation may be simplified.

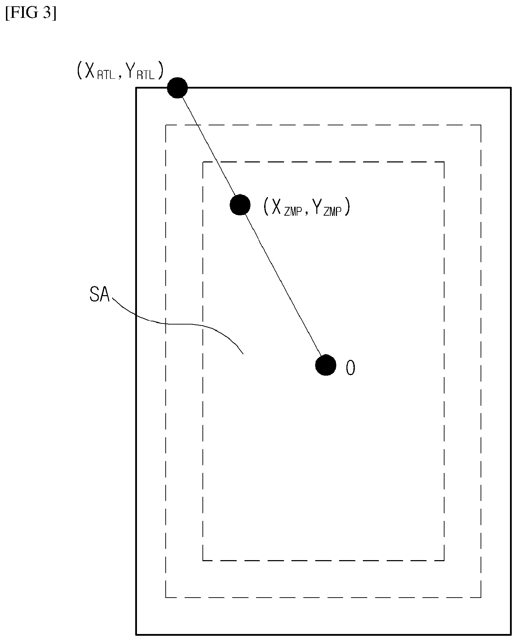

When the coordinates (*x_{ZMP}*,*y_{ZMP}*) of the ZMP obtained through Equation 1 are located within a support region (SA) of the construction equipment (1), as illustrated in FIG. 3, it may be determined that no current rollover risk exists. The support region (SA) of the construction equipment (1) is a region defined by connecting ground contact points between the equipment and the ground with straight lines. For example, when the lower body (10) of the equipment is in contact with the ground, a region occupied by the lower body (10) may correspond to the support region (SA).

However, the rollover prevention system (100) of the present disclosure does not provide the position of the ZMP coordinates to the operator. Instead, the rollover prevention system (100) calculates a tipping load using the ZMP coordinates and provides the calculated tipping load to the operator, thereby enabling the operator to intuitively determine a difference between a current lifted load and the tipping load and to recognize how much weight can be lifted under a current operating condition of the equipment.

For this purpose, as illustrated in FIG. 3, the tipping load calculation unit (130) receives the coordinates (*x_{ZMP}*,*y_{ZMP}*) of the ZMP calculated by the ZMP calculation unit (120), and derives a one-dimensional function by connecting an origin (O) of the support region (SA) and the coordinates (*x_{ZMP}*,*y_{ZMP}*) of the ZMP. When the equipment (1) is positioned on level ground, the origin (O) of the support region (SA) may be set at a center of the support region (SA). Coordinates (*x_{RTL}*,*y_{RTL}*) at a boundary of the support region (SA) are then obtained using the derived one-dimensional function. Thereafter, the coordinates (*x_{RTL}, y_{RTL}*) are substituted into Equation 1, and a tipping load may be calculated by back-calculation. In other words, the tipping load may be obtained by performing the calculation while treating only a mass (***m***₅) of the bucket (50) as a variable. The tipping load calculated by the tipping load calculation unit (130) is output to the display device (60) through the output unit (150) and displayed on the display device (60).

In addition, the tipping load calculated by the tipping load calculation unit (130) is transmitted to the rollover risk determination unit (140), and the rollover risk determination unit (140) determines whether a rollover risk exists by comparing the tipping load with a current lifted load. For example, when the current lifted load is equal to or greater than 100% of the tipping load, the rollover risk determination unit (140) may determine that a rollover risk exists. Conversely, when the current lifted load is less than 100% of the tipping load, the rollover risk determination unit (140) may determine that no rollover risk exists. According to an embodiment, when the current lifted load is less than 100% of the tipping load but is equal to or greater than a predetermined percentage of the tipping load (for example, 70%), the rollover risk determination unit (140) may determine that there is a high likelihood of a rollover risk.

In some cases, an operator may input a sensitivity setting to the input unit (110). When the operator sets a high sensitivity level, the rollover risk determination unit (140) may determine that a rollover risk exists when the current lifted load is equal to or greater than 90% of the tipping load. On the other hand, when the operator sets a low sensitivity level, the rollover risk determination unit (140) may determine that a rollover risk exists when the current lifted load is equal to or greater than 110% of the tipping load.

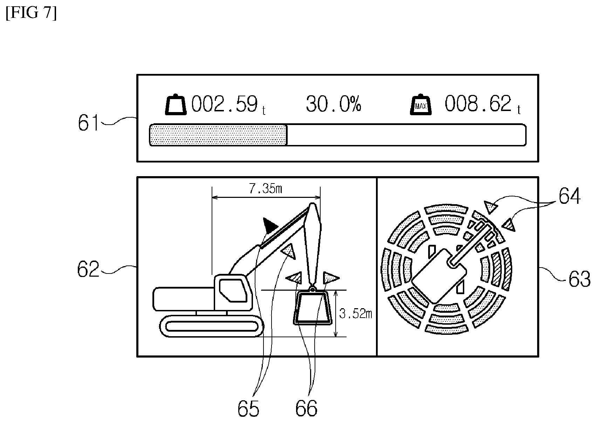

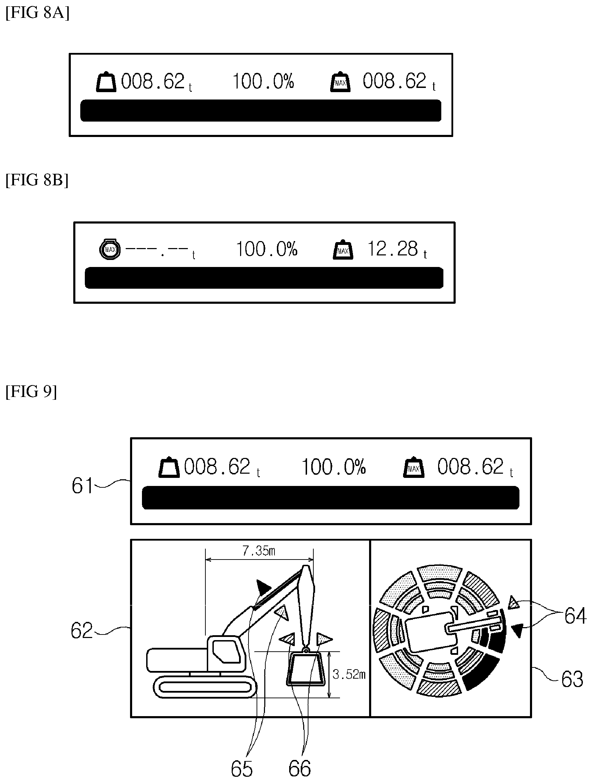

Information regarding the rollover risk determined by the rollover risk determination unit (140) is transmitted to the output unit (150). When a rollover risk exists, the output unit (150) may output information such that the rollover risk is displayed on the display device (60) in, for example, red, and may also output a signal causing the alarm device (70) to generate a warning sound (see FIG. 9). Conversely, when no rollover risk exists, the output unit (150) may output information such that the rollover risk is displayed on the display device (60) in, for example, green (see FIG. 7). According to an embodiment, when the rollover risk determination unit (140) determines that there is a high likelihood of a rollover risk, the output unit (150) may output information such that the rollover risk is displayed on the display device (60) in, for example, yellow.

Next, a method of calculating the ZMP coordinates and the tipping load when the equipment (1) is positioned on an inclined surface will be described.

When the equipment (1) is positioned on an inclined surface, a problem arises in that a shape of a support region projected onto level ground changes from a rectangle to a shape such as a parallelogram, and a center of rotation for the ZMP is no longer located at an origin of the equipment. In particular, since boundary lines of the region projected onto level ground in the form of a parallelogram are represented by one-dimensional functions, additional computational complexity is introduced when determining whether a rollover risk exists.

Accordingly, the present disclosure is characterized in that an effect of the inclined surface is taken into account in a force (i.e., gravity) acting on the equipment rather than in a position of the equipment. More specifically, when a slope rotation matrix obtained by an inclination sensor provided on the upper body (20) is denoted by *Rₒ,* a slope rotation matrix *R*₁ is derived by considering a swing angle of the upper body (20) relative to the lower body (10) in the slope rotation matrix *Rₒ*. Accordingly, a transpose matrix *R*₁*^{T}* of *R*₁ is applied to gravitational acceleration, thereby allowing calculation of portions affected by gravity when the equipment (1) is positioned on an inclined surface. That is, an equipment subjected to an influence of gravitational acceleration g on an inclined surface is treated, for calculation purposes, as an equipment on level ground subjected to an influence of *R*₁*^{T}g*.

As a result, Equation 1 may be modified into Equation 2 below. [Equation 2] $\begin{matrix}{x}_{zmp} = \frac{{\sum }_{i} {m}_{i} \left(z{"}_{i}+{\left({{R}_{1}}^{T}g\right)}_{z}\right) {x}_{i} - {\sum }_{i} {m}_{i} \left(x{"}_{i}+{\left({{R}_{1}}^{T}g\right)}_{x}\right) {z}_{i} - {\sum }_{i} {\left({T}_{i}\right)}_{y} + {\sum }_{j} {\left({M}_{j}\right)}_{y} + {\sum }_{k} \left({\left({s}_{k}\right)}_{z}{\left({f}_{k}\right)}_{x}-{\left({s}_{k}\right)}_{x}{\left({f}_{k}\right)}_{z}\right)}{{\sum }_{i} {m}_{i} \left(z{"}_{i}+{\left({{R}_{1}}^{T}g\right)}_{z}\right) - {\sum }_{k} {\left({f}_{k}\right)}_{z}} \\ {y}_{zmp} = \frac{{\sum }_{i} {m}_{i} \left(z{"}_{i}+{\left({{R}_{1}}^{T}g\right)}_{z}\right) {y}_{i} - {\sum }_{i} {m}_{i} \left(y{"}_{i}+{\left({{R}_{1}}^{T}g\right)}_{y}\right) {z}_{i} + {\sum }_{i} {\left({T}_{i}\right)}_{y} + {\sum }_{j} {\left({M}_{j}\right)}_{y} + {\sum }_{k} \left({\left({s}_{k}\right)}_{z}{\left({f}_{k}\right)}_{x}-{\left({s}_{k}\right)}_{x}{\left({f}_{k}\right)}_{z}\right)}{{\sum }_{i} {m}_{i} \left(z{"}_{i}+{\left({{R}_{1}}^{T}g\right)}_{z}\right) - {\sum }_{k} {\left({f}_{k}\right)}_{z}}\end{matrix}$

Similarly, when the construction equipment (1) is performing a lifting operation, that is, when there are no externally applied moments and forces, *Mⱼ* and *fₖ* may be ignored, and the calculation may be performed by treating the equipment as being subjected to *R*₁*^{T}g* on level ground. Accordingly, when g̅:= *R*₁*^{T}g* at *g=*(0*,*0*,* g*_{z}*), Equation 2 may be simplified and expressed as Equation 3 below. [Equation 3] $\begin{matrix}{x}_{zmp} = \frac{{\sum }_{i} {m}_{i} \left(z{"}_{i}+{\left(\overline{g}\right)}_{z}\right) {x}_{i} - {\sum }_{i} {m}_{i} \left(x{"}_{i}+{\left(\overline{g}\right)}_{x}\right) {z}_{i} - {\sum }_{i} \left.{\left({T}_{i}\right)}_{y}\right)}{{\sum }_{i} {m}_{i} \left(z{"}_{i}+{\left(\overline{g}\right)}_{z}\right)} \\ {y}_{zmp} = \frac{{\sum }_{i} {m}_{i} \left(z{"}_{i}+{\left(\overline{g}\right)}_{z}\right) {y}_{i} - {\sum }_{i} {m}_{i} \left(y{"}_{i}+{\left(\overline{g}\right)}_{y}\right) {z}_{i} - {\sum }_{i} \left.{\left({T}_{i}\right)}_{y}\right)}{{\sum }_{i} {m}_{i} \left(z{"}_{i}+{\left(\overline{g}\right)}_{z}\right)}\end{matrix}$

The slope rotation matrix *Rₒ* may be *Rₒ*=*Rₓ*(θ*ᵣₒₗₗ*)*R_{y}*(*θ_{pitch}*) or *Rₒ*=*R_{y}*(θ*_{pitch}*)*Rₓ*(θ*ᵣₒₗₗ*) depending on characteristics of the inclination sensor provided on the upper body (20). Here, *Rₓ*(θ) is a matrix transformation representing rotation about an x-axis, *R_{y}*(θ) is a matrix transformation representing rotation about a y-axis, θ*ᵣₒₗₗ* is a roll angle of the upper body (20), and θ*_{pitch}* is a pitch angle of the upper body (20). More specifically, the slope rotation matrix *Rₒ* may be expressed as follows. Hereinafter, θ*ᵣ=*θ*ᵣₒₗₗ* and θ*ₚ*=θ*_{pitch}*. ${R}_{o} = {R}_{x} \left({θ}_{r}\right) {R}_{y} \left({θ}_{p}\right) = \left[\begin{matrix}1 & 0 & 0 \\ 0 & cos {θ}_{r} & - sin {θ}_{r} \\ 0 & sin {θ}_{r} & cos {θ}_{r}\end{matrix}\right] \left[\begin{matrix}cos {θ}_{p} & 0 & sin {θ}_{p} \\ 0 & 1 & 0 \\ - sin {θ}_{p} & 0 & cos {θ}_{p}\end{matrix}\right] = \left[\begin{matrix}cos {θ}_{p} & 0 & sin {θ}_{p} \\ sin {θ}_{r} sin {θ}_{p} & cos {θ}_{r} & - sin {θ}_{r} cos {θ}_{p} \\ - cos {θ}_{r} sin {θ}_{p} & sin {θ}_{r} & cos {θ}_{r} cos {θ}_{p}\end{matrix}\right]$ or ${R}_{o} = {R}_{y} \left({θ}_{p}\right) {R}_{x} \left({θ}_{r}\right) = \left[\begin{matrix}cos {θ}_{p} & 0 & sin {θ}_{p} \\ 0 & 1 & 0 \\ - sin {θ}_{p} & 0 & cos {θ}_{p}\end{matrix}\right] \left[\begin{matrix}1 & 0 & 0 \\ 0 & cos {θ}_{r} & - sin {θ}_{r} \\ 0 & sin {θ}_{r} & cos {θ}_{r}\end{matrix}\right] = \left[\begin{matrix}cos {θ}_{p} & sin {θ}_{p} sin {θ}_{r} & sin {θ}_{p} cos {θ}_{r} \\ 0 & cos {θ}_{r} & - sin {θ}_{r} \\ - sin {θ}_{p} & cos {θ}_{p} sin {θ}_{r} & cos {θ}_{p} cos {θ}_{r}\end{matrix}\right]$

The slope rotation matrix *R*₁ is derived by multiplying the slope rotation matrix *R*ₒ by *R_{z}^{T}*(θ*_{swing}*), wherein *R_{z}*(θ) is a matrix transformation representing rotation about a z-axis, and θ*_{swing}* is a swing angle of the upper body (20) relative to the lower body (10). If the lower body (10) and the upper body (20) are facing in the same direction, that is, when θ*_{swing}* is 0°, *Rₒ*=*R*₁.

As described above, in the present disclosure, the effect of an inclined surface is reflected only in the gravitational-force component, rather than in position, velocity, and acceleration components of centers of gravity. Accordingly, a computational load may be significantly reduced without requiring complex function calculations.

The process of calculating the tipping load using the coordinates (*x_{ZMP}*,*y_{ZMP}*) of the ZMP obtained through Equation 2 (or the simplified Equation 3) is identical to that described above. That is, a one-dimensional function is derived by connecting the origin (O) of the support region (SA) and the coordinates (*x_{ZMP}*,*y_{ZMP}*) of the ZMP. Coordinates (*x_{RTL}*,*y_{RTL}*) at a boundary of the support region (SA) are then obtained through the derived one-dimensional function, and the tipping load may be calculated by back-calculation by substituting the coordinates (*x_{RTL}*, *y_{RTL}*) into Equation 2.

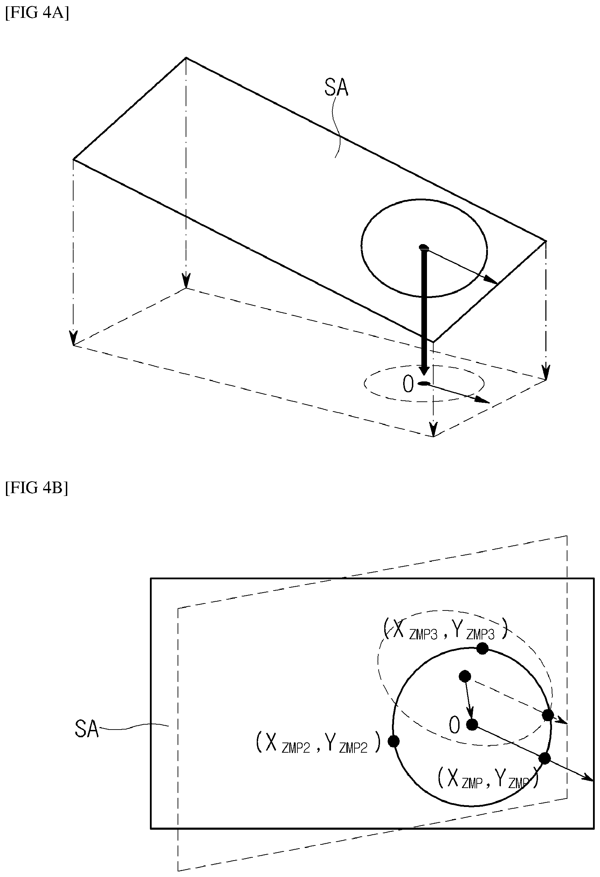

As illustrated in FIGS. 4A and 4B, when the equipment (1) is positioned on an inclined surface, an actual support region (indicated by a solid line) formed by connecting ground contact points of the equipment (1) on the inclined surface with straight lines has a rectangular shape, similar to that on level ground. However, a virtual support region (indicated by a dashed line) projected onto level ground would have the shape of a parallelogram. In the present disclosure, since the equipment (1) positioned on an inclined surface is treated, for calculation purposes, as equipment on level ground subjected to *R*₁*^{T}g*, the actual support region rather than the virtual support region projected onto level ground may be set as the support region (SA). In other words, regardless of whether the equipment (1) is positioned on level ground or on an inclined surface, the support region (SA) may be defined as a region formed by connecting the ground contact points of the equipment (1) with straight lines.

However, when the equipment (1) is positioned on an inclined surface, the origin (O) of the support region (SA) does not correspond to a center of the support region (SA), unlike the case where the equipment (1) is positioned on level ground. Accordingly, as illustrated in FIG. 4B, in order to determine the origin (O) of the support region (SA), a swing angle of the upper body (20) is arbitrarily changed to additionally obtain two ZMP coordinates (*x*_{*zmp*2}*, y*_{*zmp*2}) and (*x*_{*zmp*3},*y*_{*zmp*3}). Thereafter, a total of three ZMP coordinates are connected to define a circle, and a center of the circle may be set as the origin (O) of the support region (SA).

According to an embodiment, the rollover prevention system (100) may further include an input value adjustment unit (160), an additional ZMP calculation unit (170), and an additional tipping load calculation unit (180).

The input value adjustment unit (160) changes an input value to an arbitrary value different from a current swing angle and a current reach value of the equipment and transmits the changed input value to the additional ZMP calculation unit (170). The additional ZMP calculation unit (170) and the additional tipping load calculation unit (180) calculate a ZMP coordinate and a tipping load corresponding to the arbitrary input value. The tipping load calculated based on the arbitrary input value is likewise transmitted to the rollover risk determination unit (140), which determines whether a rollover risk exists. Information regarding the determined rollover risk is then transmitted to the output unit (150). Thereafter, the rollover risk may be displayed on the display device (60) in the form of a color indication or the like through the output unit (150). At this time, the rollover risk may be displayed on the display device (60) at a position corresponding to the modified arbitrary swing angle and reach value. This will be described in greater detail below with reference to the display device (60). Accordingly, an operator may identify not only a rollover risk associated with a current operating condition but also rollover risks associated with various anticipated operating conditions, thereby facilitating operation while preventing rollover in advance.

As one example, the input value adjustment unit (160) may uniformly divide a 360° swing angle range of the upper body (20) into a total of eight sections. In a clockwise direction, a first section may have a center value of 0°, a second section may have a center value of 45°, a third section may have a center value of 90°, a fourth section may have a center value of 135°, a fifth section may have a center value of 180°, a sixth section may have a center value of 225°, a seventh section may have a center value of 270°, and an eighth section may have a center value of 315°. If a current swing angle of the upper body (20) belongs to the second section, the input value adjustment unit (160) may arbitrarily change the swing angle of the upper body (20) to the center values of the remaining sections and provide the changed values to the additional ZMP calculation unit (170) (see FIG. 7).

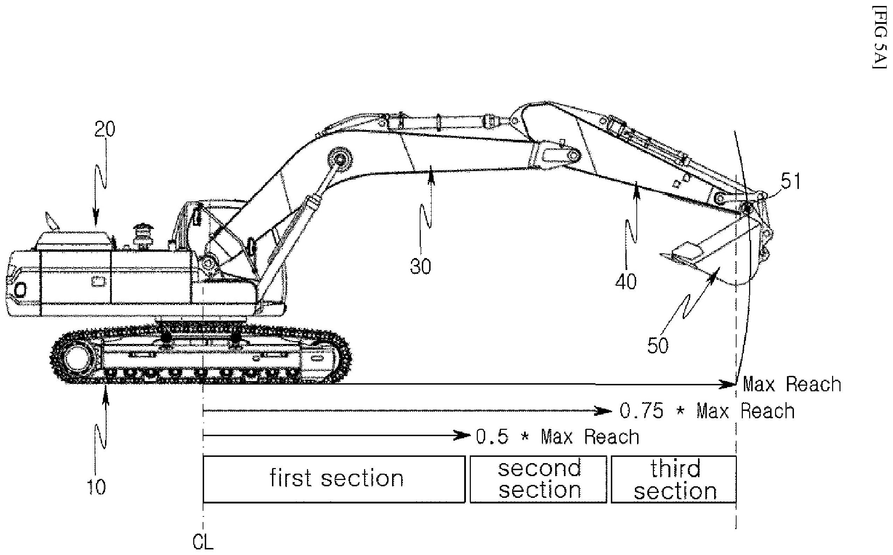

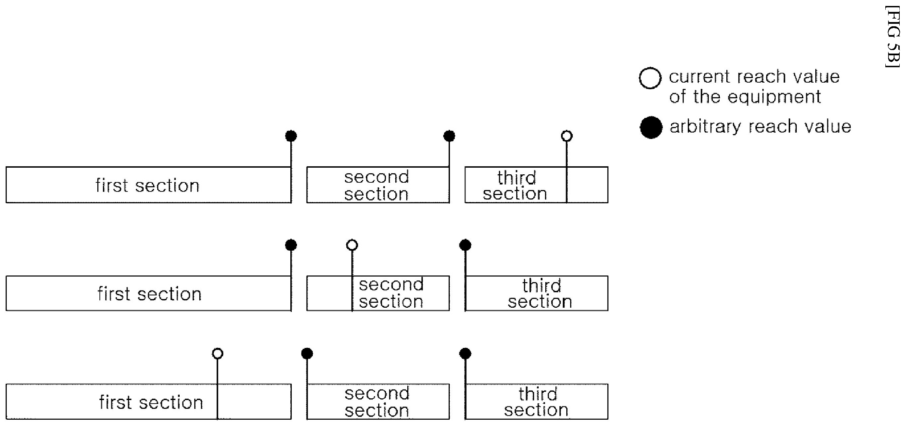

As another example, as illustrated in FIG. 5A, the input value adjustment unit (160) may divide a maximum reach range of the equipment into a first section corresponding to 50% or less of a maximum reach value, a second section corresponding to greater than 50% and less than or equal to 75% of the maximum reach value, and a third section corresponding to greater than 75% and less than or equal to 100% of the maximum reach value. The reach of the equipment refers to a horizontal distance between the swing center axis (CL) of the upper body (20) and the third support point (51). A maximum reach refers to a distance when the third support point (51) reaches the ground. If a current reach of the equipment belongs to the second section, the input value adjustment unit (160) may arbitrarily change the reach to an end value of the first section closest to the second section and an end value of the third section closest to the second section, respectively, and provide the changed reach values to the additional ZMP calculation unit (170). For each case in which the current reach of the equipment belongs to the third section, the second section, and the first section, respectively, arbitrary reach values modified by the input value adjustment unit (160) are illustrated in FIG. 5B for ease of understanding.

According to an embodiment, the rollover prevention system (100) may further include a hydraulic critical load calculation unit (190).

The hydraulic critical load calculation unit (190) calculates a rated hydraulic critical load of the boom cylinder (32) and a rated hydraulic critical load of the arm cylinder (42). The rated hydraulic critical load of the boom cylinder (32) refers to a hydraulic critical load that the boom cylinder (32) is capable of withstanding, and the rated hydraulic critical load of the arm cylinder (42) refers to a hydraulic critical load that the arm cylinder (42) is capable of withstanding.

The rated hydraulic critical load of the boom cylinder (32) may be calculated through a moment equilibrium equation for the boom cylinder (32) (Equation 4 below), and the rated hydraulic critical load of the arm cylinder (42) may be calculated through a moment equilibrium equation for the arm cylinder (42) (Equation 5 below). Equations 4 and 5 below may be applied when the equipment (1) is positioned on level ground. [Equation 4] $\begin{matrix}{M}_{Bm} + {M}_{Arm} + {M}_{Wght} + {M}_{Bmcyl} = {0}_{⇔} \\ \left({r}_{Bm}\times {F}_{Bm}\right) + \left({r}_{Arm}\times {F}_{Arm}\right) + \left({r}_{Wght}\times {F}_{Wght}\right) + \left({r}_{Bmcyl}\times {F}_{Bmcyl}\right) = 0\end{matrix}$ [Equation 5] $\begin{matrix}{M}_{Arm} + {M}_{Wght} + {M}_{Armcyl} = {0}_{⇔} \\ \left({r}_{Arm}\times {F}_{Arm}\right) + \left({r}_{Wght}\times {F}_{Wght}\right) + \left({r}_{Armcyl}\times {F}_{Armcyl}\right) = 0\end{matrix}$

Here, Bm denotes the boom (30), Arm denotes the arm (40), Wght denotes a weight of the bucket (50) or a lifted object attached to the third support point (51) (Lift Point), Bmcyl denotes the boom cylinder (32), and Armcyl denotes the arm cylinder (42).

In Equation 4, ***r**_{Bm}*, ***r**_{Arm}*, and ***r**_{Wght}* are position vectors extending from the first support point (31) to centers of gravity of Bm, Arm, and Wght, respectively, and ***r**_{Bmcyl}* denotes a position vector extending from the first support point (31) to a fourth support point (33) at which the boom cylinder (32) applies a pushing force. Further, *F_{Bmcyl}* denotes a force generated by the boom cylinder (32), and *F_{Bm}*, *F_{Arm}*, and *F_{Wght}* denote forces resulting from gravitational acceleration acting on masses of Bm, Arm, and Wght, respectively (e.g., *F_{Bm}=m_{Bm}*×*g*). Accordingly, Equation 4 makes it possible to determine an equilibrium point at which a moment *(M_{Bmcyl}*) generated at the first support point (31) by a force applied by the boom cylinder (32) can withstand moments (*M_{Bm}*, *M_{Arm}*, and *M_{Wght}*) generated by weights of Bm, Arm, and Wght, respectively. Since the boom cylinder (32) generates force hydraulically, a weight corresponding to such an equilibrium point is referred to as a hydraulic critical load.

Similarly, in Equation 5, ***r**_{Arm}* and ***r**_{Wght}* are position vectors extending from the second support point (41) to centers of gravity of Arm and Wght, respectively, and ***r**_{Armcyl}* denotes a position vector extending from the second support point (41) to a fifth support point (43) at which the arm cylinder (42) applies a pushing force. Further, *F_{Armcyl}* denotes a force generated by the arm cylinder (42), and *F_{Arm}* and *F_{Wght}* denote forces resulting from gravitational acceleration acting on masses of Arm and Wght, respectively.

When the equipment (1) is positioned on an inclined surface, since both the boom cylinder (32) and the arm cylinder (42) are connected to the upper body (20), the transpose matrix *Rₒ^{T}* of the slope rotation matrix *R*_{O} described above may be applied to the gravity vector.

Specifically, ${{R}_{o}}^{T} = \left[\begin{matrix}cos {θ}_{p} & sin {θ}_{r} sin {θ}_{p} & - cos {θ}_{r} sin {θ}_{p} \\ 0 & cos {θ}_{r} & sin {θ}_{r} \\ sin {θ}_{p} & - sin {θ}_{r} cos {θ}_{p} & cos {θ}_{r} cos {θ}_{p}\end{matrix}\right]$ corresponds to the case where *R*₀ =*Rₓ*(θ*ᵣ*)*R_{y}*(θ*ₚ)*, and ${{R}_{o}}^{T} = \left[\begin{matrix}cos {θ}_{p} & 0 & - sin {θ}_{p} \\ sin {θ}_{p} sin {θ}_{r} & cos {θ}_{r} & cos {θ}_{p} sin {θ}_{r} \\ sin {θ}_{p} cos {θ}_{r} & - sin {θ}_{r} & cos {θ}_{p} cos {θ}_{r}\end{matrix}\right]$ corresponds to the case where *R*₀=*R_{y}*(θ*ₚ*)*Rₓ*(*θᵣ*).

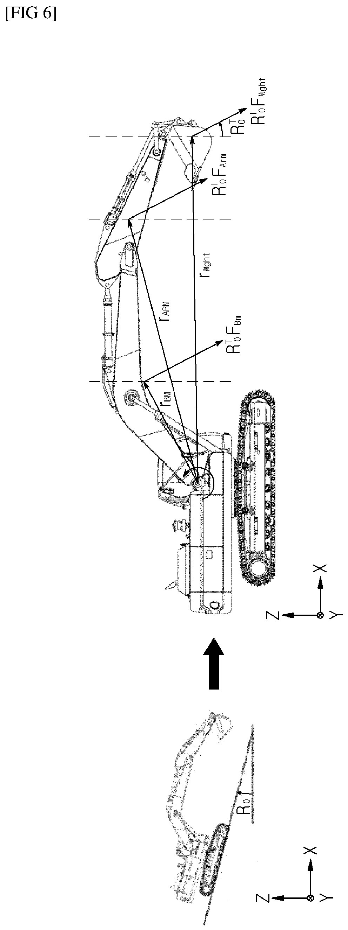

Accordingly, Equation 4 for the boom cylinder (32) may be modified into Equation 6, and Equation 5 for the arm cylinder (42) may be modified into Equation 7. Referring to FIG. 6, it can be understood that, when *Rₒ^{T}* is applied to the gravity vector of equipment positioned on an inclined surface, the equipment may be treated as if it were positioned on level ground. [Equation 6] $\left({r}_{Bm}\times {{R}_{o}}^{T}{F}_{Bm}\right) + \left({r}_{Arm}\times {{R}_{o}}^{T}{F}_{Arm}\right) + \left({r}_{Wght}\times {{R}_{o}}^{T}{F}_{Wght}\right) + \left({r}_{Bmcyl}\times {F}_{Bmcyl}\right) = 0$ [Equation 7] $\left({r}_{Arm}\times {{R}_{o}}^{T}{F}_{Arm}\right) + \left({r}_{Wght}\times {{R}_{o}}^{T}{F}_{Wght}\right) + \left({r}_{Armcyl}\times {F}_{Armcyl}\right) = 0$

The hydraulic critical load calculated by the hydraulic critical load calculation unit (190) is transmitted to the output unit (150). The output unit (150) may provide, as a final hydraulic critical load, a smaller value between the hydraulic critical load of the boom cylinder (32) and the hydraulic critical load of the arm cylinder (42) to the operator.

The output unit (150) may be configured to display both the tipping load received from the tipping load calculation unit (130) and the final hydraulic critical load received from the hydraulic critical load calculation unit (190) on the display device (60). However, in the present embodiment, the output unit (150) outputs to display only a smaller value between the tipping load and the final hydraulic critical load on the display device (60). This will be described in greater detail below with reference to the display device (60).

Next, the display device (60) will be described in detail with reference to FIGS. 7 and 8.

As illustrated in FIG. 7, the display device (60) according to the present embodiment includes a first display unit (61), a second display unit (62), and a third display unit (63). In the following description, an area filled with dots in the drawings represents a green area, an area filled with hatching represents a yellow area, and an area completely filled in black represents a red area.

The first display unit (61) displays a current lifted load and a smaller value between a tipping load and a final hydraulic critical load. In FIG. 7, a case is described in which the current lifted load is 2.59t, the tipping load is 8.62t, and the final hydraulic critical load is 12.28t. In the present embodiment, since the tipping load is smaller than the final hydraulic critical load, the tipping load is displayed in the first display unit (61). More specifically, the current lifted load is displayed on a left side of the first display unit (61) in the drawing, and the tipping load is displayed on a right side thereof. If the final hydraulic critical load is smaller than the tipping load, the final hydraulic critical load would instead be displayed in the first display unit (61). In addition, the first display unit (61) may further display a percentage indicating how much the current lifted load corresponds to the displayed tipping load or the displayed final hydraulic critical load.

However, an operator cannot determine whether the value of 8.62t displayed in the first display unit (61) corresponds to the tipping load or the final hydraulic critical load. Accordingly, when the current lifted load reaches 100% of the tipping load and thus enters a dangerous condition, the first display unit (61) may be displayed as illustrated in FIG. 8A. Conversely, when the current lifted load reaches 100% of the final hydraulic critical load and thus enters a dangerous condition, the first display unit (61) may be displayed as illustrated in FIG. 8B. By displaying a risk associated with the tipping load differently from a risk associated with the hydraulic critical load in the first display unit (61), an operator can clearly identify which factor is causing the hazardous condition.

The second display unit (62) may display a current reach value and a current height value together with a schematic representation of the construction equipment (1). Here, the height refers to a straight-line distance from the ground to the third support point (51).

The third display unit (63) displays rollover risks corresponding to a plurality of swing angle sections and a plurality of reach sections. In addition, the third display unit (63) indicates a current swing angle section and a current reach section of the equipment through a schematic top view of the construction equipment (1). In the present embodiment, as described above with reference to the input value adjustment unit (160), the swing angle range is divided into a total of eight sections and the reach range is divided into a total of three sections, such that rollover risks for a total of twenty-four sections are displayed. The process of determining the rollover risk for each section has been described above. However, the present disclosure is not limited thereto. In order to enable an operator to recognize rollover risks associated with various operating conditions, it is preferable that the plurality of swing angle sections include six or more swing angle sections, and that the plurality of reach sections include two or more reach sections.

Briefly explained, a current swing angle of the equipment belongs to the second section, and the current reach also belongs to the second section. Since the current lifted load corresponds to only 30% of the tipping load, as indicated in the first display unit (61), the third display unit (63) indicates that no rollover risk exists by displaying the corresponding section in green. However, when the input value adjustment unit (160) changes the swing angle of the equipment to 90°, corresponding to the third section, while maintaining the current reach unchanged, the additional ZMP calculation unit (170), the additional tipping load calculation unit (180), and the rollover risk determination unit (140) determine that there is a high likelihood of a rollover risk. Accordingly, the third display unit (63) displays, in yellow, that a high likelihood of a rollover risk exists at the third swing angle section and the second reach section.

According to an embodiment, a first indicator (64) may additionally be displayed within a current swing angle section in the third display unit (63). The first indicator (64) pointing in a clockwise direction indicates a rollover risk corresponding to a case where the current swing angle is changed by +α, whereas the first indicator (64) pointing in a counterclockwise direction indicates a rollover risk corresponding to a case where the current swing angle is changed by -α. Preferably, α is 10° or less. The rollover risk calculation for color output of the first indicator (64) may likewise be performed by the input value adjustment unit (160), the additional ZMP calculation unit (170), the additional tipping load calculation unit (180), and the rollover risk determination unit (140), and may be output through the output unit (150).

According to an embodiment, the second display unit (62) may further display a second indicator (65) representing a rollover risk associated with upward and downward movement (up/down direction) of the boom (30) at a current load, and a third indicator (66) representing a rollover risk associated with forward and rearward movement (in/out direction) of the arm (40). Accordingly, whether movement of the boom (30) and the arm (40) is allowable under a current load condition may be guided to the operator.

The rollover risk calculation for color output of the second indicator (65) and the third indicator (66) may likewise be performed by the input value adjustment unit (160), the additional ZMP calculation unit (170), the additional tipping load calculation unit (180), and the rollover risk determination unit (140), and the result may be output through the output unit (150). Furthermore, although not illustrated in FIG. 2, hydraulic critical loads corresponding to upward and downward movement of the boom (30) and forward and rearward movement of the arm (40) at a current load may be additionally calculated so that the second display unit (62) can indicate not only risks associated with the tipping load but also risks associated with the hydraulic critical load, unlike the third display unit (63). The additionally calculated hydraulic critical loads may be transmitted to the rollover risk determination unit (140). Accordingly, the rollover risk determination unit (140) may determine whether a rollover risk exists for each movement direction of the boom (30) and the arm (40) by comparing the current lifted load with a smaller value between an additionally calculated tipping load and an additionally calculated hydraulic critical load.

FIG. 9 illustrates another state of the display device (60). In FIG. 9, a rollover risk is indicated for a current swing angle section and a current reach section of the equipment, and in particular, the current reach section of the equipment is emphasized. That is, the third section, which corresponds to the current reach section of the equipment, is displayed in a bold manner for all swing directions.

Although the present disclosure has been described with reference to specific embodiments and examples, the present disclosure is not limited thereto. Various modifications and variations may be made by those having ordinary skill in the art without departing from the spirit and scope of the present disclosure as defined by the appended claims, and such modifications and variations are intended to fall within the scope of protection of the present disclosure.

### INDUSTRIAL APPLICABILITY

The present disclosure relates to a rollover prevention system for construction equipment that calculates a tipping load of construction equipment and provides the calculated tipping load to an operator, and that effectively warns the operator of a rollover risk by indicating rollover risks according to a swing angle section and a reach section.

## Claims

1. A rollover prevention system for construction equipment, comprising:
a lower body;
an upper body rotatably installed on the lower body;
a boom rotatably connected to the upper body and rotated by a boom cylinder;
an arm rotatably connected to the boom and rotated by an arm cylinder; and
a bucket rotatably connected to the arm and rotated by a bucket cylinder,
wherein the system calculates a tipping load using position information, acceleration information, and external force information of the lower body, the upper body, the boom, the arm, and the bucket, and coordinates at boundaries of a support region defined by connecting ground contact points of the equipment, and provides the calculated tipping load to an operator.

2. The rollover prevention system for construction equipment according to claim 1,
wherein the system obtains coordinates (*x_{zmp}*,*y_{zmp}*) of a ZMP using the position information, acceleration information, and external force information of the lower body, the upper body, the boom, the arm, and the bucket, derives a one-dimensional function connecting an origin of the support region and the coordinates (*x_{zmp},y_{zmp}*) of the ZMP, determines coordinates (*x_{RTL}*,*y_{RTL}*) at a boundary of the support region through the one-dimensional function, and calculates the tipping load by back-calculation using the coordinates (*x_{RTL}*,*y_{RTL}*) at the boundary of the support region.

3. The rollover prevention system for construction equipment according to claim 2,
wherein, when the construction equipment is positioned on an inclined surface, the system obtains a slope rotation matrix *Rₒ* from an inclination sensor provided on the upper body, derives a slope rotation matrix *R*₁ by considering a swing angle of the upper body with respect to the lower body in the slope rotation matrix *Rₒ*, and applies *R*₁*^{T}* to gravitational acceleration among the acceleration information when calculating the coordinates (*x_{zmp},y_{zmp}*) of the ZMP.

4. The rollover prevention system for construction equipment according to claim 3,
wherein the slope rotation matrix *Rₒ* is *Rₓ*(θ*ᵣₒₗₗ*)*R_{y}*(θ*_{pitch}*) or *R_{y}*(*θ_{pitch}*)*Rₓ*(θ*ᵣₒₗₗ*), wherein *Rₓ*(θ) is a matrix transformation representing rotation about an x-axis, *R_{y}*(θ) is a matrix transformation representing rotation about a y-axis, θ*ᵣₒₗₗ* is a roll angle of the upper body, and θ*_{pitch}* is a pitch angle of the upper body.

5. The rollover prevention system for construction equipment according to claim 3,
wherein the slope rotation matrix *R*₁ is derived by multiplying the slope rotation matrix *Rₒ* by *R_{z}^{T}*(θ*_{swing}*), wherein *R_{z}*(θ) is a matrix transformation representing rotation about a z-axis, and θ*_{swing}* is the swing angle of the upper body with respect to the lower body.

6. The rollover prevention system for construction equipment according to claim 3,
wherein the support region corresponds to a region defined by connecting ground contact points of the construction equipment when the construction equipment is positioned on level ground or on an inclined surface.

7. The rollover prevention system for construction equipment according to claim 6,
wherein, when the construction equipment is positioned on an inclined surface, an origin of the support region is determined by additionally extracting coordinates of two ZMPs by changing the swing angle of the upper body to arbitrary values, connecting a total of three ZMP coordinates to define a circle, and setting a center of the circle as the origin.

8. The rollover prevention system for construction equipment according to claim 1,
wherein the system additionally calculates a tipping load by changing a swing angle or a reach of the construction equipment to an arbitrary value different from a current swing angle and a current reach, determines a rollover risk by comparing the additionally calculated tipping load with a current lifted load, and provides information regarding whether a rollover risk exists at the arbitrary value to an operator.

9. The rollover prevention system for construction equipment according to claim 8,
wherein the system divides the swing angle of the construction equipment into a plurality of sections and divide the reach of the construction equipment into a plurality of sections, and provides an operator with information indicating whether a rollover risk exists for each section.

10. The rollover prevention system for construction equipment according to claim 9,
wherein the system divides the swing angle of the construction equipment into six or more sections and divides the reach of the construction equipment into two or more sections.

11. The rollover prevention system for construction equipment according to claim 1,
wherein the system calculates a rated hydraulic critical load of the boom cylinder using a moment equilibrium equation of the boom cylinder, calculates a rated hydraulic critical load of the arm cylinder using a moment equilibrium equation of the arm cylinder, and sets a smaller one of the rated hydraulic critical load of the boom cylinder and the rated hydraulic critical load of the arm cylinder as a final hydraulic critical load.

12. The rollover prevention system for construction equipment according to claim 11,
wherein, when the construction equipment is positioned on an inclined surface, the system obtains a slope rotation matrix *Rₒ* from an inclination sensor provided on the upper body, and applies *Rₒ^{T}* to a gravitational-force component in a moment equilibrium equation of the boom cylinder and to a gravitational-force component in a moment equilibrium equation of the arm cylinder.

13. The rollover prevention system for construction equipment according to claim 11,
wherein the system determines a smaller value between the tipping load and the final hydraulic critical load and provides the determined value to an operator.

14. The rollover prevention system for construction equipment according to claim 3,
wherein when the construction equipment is positioned on an inclined surface, the coordinates (*x_{zmp},y_{zmp}*) of the ZMP are calculated according to Equation 2. [Equation 2] $\begin{matrix}{x}_{zmp} = \frac{{\sum }_{i} {m}_{i} \left(z{"}_{i}+{\left({{R}_{1}}^{T}g\right)}_{z}\right) {x}_{i} - {\sum }_{i} {m}_{i} \left(x{"}_{i}+{\left({{R}_{1}}^{T}g\right)}_{x}\right) {z}_{i} - {\sum }_{i} {\left({T}_{i}\right)}_{y} + {\sum }_{j} {\left({M}_{j}\right)}_{y} + {\sum }_{k} \left({\left({s}_{k}\right)}_{z}{\left({f}_{k}\right)}_{x}-{\left({s}_{k}\right)}_{x}{\left({f}_{k}\right)}_{z}\right)}{{\sum }_{i} {m}_{i} \left(z{"}_{i}+{\left({{R}_{1}}^{T}g\right)}_{z}\right) - {\sum }_{k} {\left({f}_{k}\right)}_{z}} \\ {y}_{zmp} = \frac{{\sum }_{i} {m}_{i} \left(z{"}_{i}+{\left({{R}_{1}}^{T}g\right)}_{z}\right) {y}_{i} - {\sum }_{i} {m}_{i} \left(y{"}_{i}+{\left({{R}_{1}}^{T}g\right)}_{y}\right) {z}_{i} + {\sum }_{i} {\left({T}_{i}\right)}_{y} + {\sum }_{j} {\left({M}_{j}\right)}_{y} + {\sum }_{k} \left({\left({s}_{k}\right)}_{z}{\left({f}_{k}\right)}_{x}-{\left({s}_{k}\right)}_{x}{\left({f}_{k}\right)}_{z}\right)}{{\sum }_{i} {m}_{i} \left(z{"}_{i}+{\left({{R}_{1}}^{T}g\right)}_{z}\right) - {\sum }_{k} {\left({f}_{k}\right)}_{z}}\end{matrix}$

15. The rollover prevention system for construction equipment according to claim 12,
wherein, when the construction equipment is positioned on an inclined surface, the moment equilibrium equation of the boom cylinder corresponds to Equation 6, and the moment equilibrium equation of the arm cylinder corresponds to Equation 7. [Equation 6] $\left({r}_{Bm}\times {{R}_{o}}^{T}{F}_{Bm}\right) + \left({r}_{Arm}\times {{R}_{o}}^{T}{F}_{Arm}\right) + \left({r}_{Wght}\times {{R}_{o}}^{T}{F}_{Wght}\right) + \left({r}_{Bmcyl}\times {F}_{Bmcyl}\right) = 0$ [Equation 7] $\left({r}_{Arm}\times {{R}_{o}}^{T}{F}_{Arm}\right) + \left({r}_{Wght}\times {{R}_{o}}^{T}{F}_{Wght}\right) + \left({r}_{Armcyl}\times {F}_{Armcyl}\right) = 0$

16. The rollover prevention system for construction equipment according to claim 8,
wherein the tipping load calculated based on current information of the construction equipment is displayed as a numerical value on a display device of the construction equipment, and a tipping load calculated using an arbitrary value different from the current information of the construction equipment is compared with a current lifted load to determine a rollover risk, after which the determined rollover risk is displayed in color on the display device of the construction equipment.
